# EUROPEAN PATENT APPLICATION

(11) **EP 1 693 388 A1**
(43) Date of publication of application: **23.08.2006**
(21) Application number: 05250958.5
(22) Date of filing: 21.02.2005
(51) Int. Cl.: C08F 10/00, C08F 4/649, C08F 4/64

(54) **Polymerisation catalysts**

(71) Applicant: INNOVENE EUROPE LIMITED, Staines Middlesex, TW18 1DT (GB)
(72) Inventor: The designation of the inventor has not yet been filed
(74) Representative: Hawkins, David George

(57) **Abstract**

A process for the polymerisation of ethylene or the copolymerisation of ethylene and alpha-olefins in the presence of a catalyst system comprising as components
(a) a transition metal compound,
(b) a cocatalyst, and
(c) optionally a support,
comprises the use of a prepolymer prepared by contact of the catalyst components with ethylene and/or one of more alpha-olefins at a temperature in the range 60°C to 100°C.

The prepolymer may be isolated or used in situ for the polymerisation of ethylene or the copolymerisation of ethylene and alpha-olefins in particular 1-hexene.

By use of the process thermal stability of the catalyst is improved leading to increased activity without any deterioration in polymer morphology.

## Description

The present invention relates to catalysts suitable for the polymerisation of olefins and in particular to transition metal catalysts providing advantages for operation in gas phase processes for the polymerisation of ethylene or the copolymerisation of ethylene and α-olefins having from 3 to 10 carbon atoms.

In recent years there have been many advances in the production of polyolefin homopolymers and copolymers due to the introduction of metallocene catalysts. Metallocene catalysts offer the advantage of generally a higher activity than traditional Ziegler catalysts and are usually described as catalysts which are single site in nature.

There have been developed several different families of metallocene complexes. In earlier years catalysts based on bis (cyclopentadienyl) metal complexes were developed, examples of which may be found in EP 129368 or EP 206794. More recently complexes having a single or mono cyclopentadienyl ring have been developed. Such complexes have been referred to as 'constrained geometry' complexes and examples of these complexes may be found in EP 416815 or EP 420436. In both of these complexes the metal atom eg. zirconium is in the highest oxidation state.

Other complexes however have been developed in which the metal atom may be in a reduced oxidation state. Examples of both the bis (cyclopentadienyl) and mono (cyclopentadienyl) complexes have been described in WO 96/04290 and WO 95/00526 respectively.

The above metallocene complexes are utilised for polymerisation in the presence of a cocatalyst or activator. Typically activators are aluminoxanes, in particular methyl aluminoxane or alternatively may be compounds based on boron compounds. Examples of the latter are borates such as trialkyl-substituted ammonium tetraphenyl- or tetrafluorophenyl-borates or triarylboranes such as tris(pentafluorophenyl) borane. Catalyst systems incorporating borate activators are described in EP 561479, EP 418044 and EP 551277.

The above metallocene complexes may be used for the polymerisation of olefins in solution, slurry or gas phase. When used in the slurry or gas phase the metallocene complex and/or the activator are suitably supported. Typical supports include inorganic oxides eg. silica or polymeric supports may alternatively be used. Examples of the preparation of supported metallocene catalysts for the polymerisation of olefins may be found in WO 94/26793, WO 95/07939, WO 96/00245, WO 96/04318, WO 97/02297 and EP 642536.

WO 98/27119 describes supported catalyst components comprising ionic compounds comprising a cation and an anion in which the anion contains at least one substituent comprising a moiety having an active hydrogen. In this disclosure supported metallocene catalysts are exemplified in which the catalyst is prepared by treating the aforementioned ionic compound with a trialkylaluminium compound followed by subsequent treatment with the support and the metallocene.

WO 98/27119 also describes a method for activating a substantially inactive catalyst precursor comprising (a) an ionic compound comprising a cation and an anion containing at least one substituent comprising a moiety having an active hydrogen, (b) a transition metal compound and optionally, (c) a support by treatment with an organometallic compound thereby forming an active catalyst.

Various methods have been utilised to prepare supported catalysts of this type. For example WO 98/27119 describes several methods of preparing the supported catalysts disclosed therein in which the support is impregnated with the ionic compound. The volume of the ionic compound may correspond from 20 volume percent to greater than 200 volume percent of the total pore volume of the support. In a preferred preparative route the volume of the solution of the ionic compound does not exceed substantially, and is preferably equal to, the total pore volume of the support. Such methods of preparation may be referred to as incipient precipitation or incipient wetness techniques.

Prepolymerisation has been used widely in the past in order to attempt to control the powder morphology of the resulting polymer product. There are numerous examples of prepolymerised Ziegler catalysts in the literature and more recently prepolymerised metallocene catalyst systems have been described.

For example, EP 723976 describes dry prepolymerised catalyst compositions comprising supported metallocene complexes activated by aluminoxanes. The metallocene complexes are bis(cyclopentadienyl) zirconium complexes and the prepolymerisation was typically performed at temperatures up to 35°C.

WO 94/03506 describes supported ionic transition metal catalysts comprising monocyclopentadienyl metallocene complexes having the metal in the +4 oxidation state. The catalyst compositions may optionally be pre-polymerised but no further details nor conditions are described.

Our earlier publication EP 816394 describes the gas phase polymerisation of olefins in the presence of supported constrained geometry catalysts comprising a first stage prepolymerisation at a temperature in the range 25°C to 40°C. The exemplified catalysts were monocyclopentadienyl metallocene complexes activated by boranes for example tris(pentafluorophenyl) borane.

We have now surprisingly found that by prepolymerising catalyst systems comprising transition metal compounds at higher temperatures leads to higher activities, improved thermal stability and also good powder morphology may be achieved.

Thus according to the present invention there is provided a process for the polymerisation of ethylene or the copolymerisation of ethylene and alpha-olefins in the presence of a catalyst system comprising as components
(a) a transition metal compound,
(b) a cocatalyst, and
(c) optionally a support,
   said process *characterised in that* said catalyst system comprises a prepolymer prepared by contact of the catalyst components with ethylene and/or one of more alpha-olefins at a temperature in the range 60°C to 100°C.

The prepolymer is preferably prepared at a temperature in the range 70°C to 95 °C and most preferably at a temperature in the range 70°C to 90°C.

The prepolymerised catalyst systems of the present invention are most suitable for use in slurry or gas phase processes.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

Gas phase processes for the polymerisation of olefins, especially for the homopolymerisation and the copolymerisation of ethylene and α-olefins for example 1-butene, 1-hexene, 4-methyl-1-pentene are well known in the art.

Typical operating conditions for the gas phase are from 20°C to 100°C and most preferably from 40°C to 95°C with pressures from subatmospheric to 100 bar.

Particularly preferred gas phase processes are those operating in a fluidised bed. Examples of such processes are described in EP 89691 and EP 699213 the latter being a particularly preferred process for use with the prepolymerised catalysts of the present invention.

The prepolymerised catalyst systems of the present invention are most suitably prepared by injection of the catalyst components into a reactor containing ethylene and/or the alpha-olefins.

The preferred method for preparation of the prepolymerised catalyst system of the present invention is by injection of the formed catalyst into a reactor containing ethylene and/or the alpha-olefins. By 'formed' catalyst is meant a catalyst compositition comprising the components (a) the transition metal compound, (b) the cocatalyst, and optionally (c) the support. For example a dried catalyst composition comprising the transition metal compound and the cocatalyst optionally supported on a suitable support.

The preferred olefin for use in the preparation of the prepolymerised catalyst system of the present invention is ethylene.

Preferred alpha-olefins for use in the preparation of the prepolymer of the present invention are 1-butene, 1-hexene or 4-methyl-1-pentene.

The prepolymer may be prepared in-situ or alternatively may be isolated before use in the final polymerisation process.

Thus according to another aspect of the present invention there is provided a process for polymerising ethylene or copolymerising ethylene and one or more alpha-olefins comprising:-
(1) in a first stage prepolymerising ethylene or ethylene and one or more alpha-olefins at a temperature in the range 60°C to 100°C in the presence of a catalyst system comprising (a) a transition metal compound; (b) a cocatalyst and optionally (c) a support,
(2) optionally, recovering the prepolymerised catalyst, and
(3) in a second stage polymerising ethylene or ethylene and one or more alpha-olefins at a temperature in the range 70°C to 100°C in the presence of said prepolymerised catalyst.

The preferred temperature for the second stage is in the range 75°C to 95°C and most preferably in the range 80°C to 90°C.

The preferred process according to this aspect of the present invention is a process wherein both stages are performed in the gas phase.

The prepolymerisation stage may be performed in the presence or absence of hydrogen.

The transition metal compound may typically be a compound of Groups IIIA to IIB of the Periodic Table of Elements (IUPAC Version). Examples of such transition metal compounds are traditional Ziegler Natta, vanadium and Phillips-type catalysts well known in the art.

The traditional Ziegler Natta catalysts include transition metal compounds from Groups IVA - VIA, in particular catalysts based on titanium compounds of formula MRx where M is titanium and R is halogen or a hydrocarbyloxy group and x is the oxidation state of the metal. Such conventional type catalysts include TiCl₄, TiBr₄, Ti(OEt)₃Cl, Ti(OEt)₂Br₂ and similar. Traditional Ziegler Natta catalysts are described in more detail in "Ziegler-Natta Catalysts and Polymerisation" by J.Boor, Academic Press, New York, 1979.

Vanadium based catalysts include vanadyl halides eg. VCl₄, and alkoxy halides and alkoxides such as VOCl₃, VOCl₂(OBu), VCl₃(OBu) and similar.

Conventional chromium catalyst compounds referred to as Phillips type catalysts include CrO₃, chromocene, silyl chromate and similar and are described in US 4124532, US 4302565.

Other conventional transition metal compounds are those based on magnesium/titanium electron donor complexes described for example in US 4302565.

Other suitable transition metal compounds are those based on the late transition metals (LTM) of Group VIII for example compounds containing iron, nickel, manganese, ruthenium, cobalt or palladium metals. Examples of such compounds are described in WO 98/27124 and WO 99/12981 and may be illustrated by [2,6-diacetylpyridinebis(2,6-diisopropylanil)FeCl₂], 2.6-diacetylpyridinebis (2,4,6-trimethylanil) FeCl₂ and [2,6-diacetylpyridinebis(2,6-diisopropylanil)CoCl₂].

Also suitable are single site catalysts based on both early and late transition metal complexes having various ligand environments, for example those described in Chem. Rev. 2003, 103, 283 - 315.

Other transition metal compounds include derivatives of Group IIIA, IVA or Lanthanide metals which are in the +2, +3 or +4 formal oxidation state. Preferred compounds include metal complexes containing from 1 to 3 anionic or neutral ligand groups which may be cyclic or non-cyclic delocalized π-bonded anionic ligand groups. Examples of such π-bonded anionic ligand groups are conjugated or non-conjugated, cyclic or non-cyclic dienyl groups, allyl groups, boratabenzene groups, phosphole and arene groups. By the term π-bonded is meant that the ligand group is bonded to the metal by a sharing of electrons from a partially delocalised π-bond.

Each atom in the delocalized π-bonded group may independently be substituted with a radical selected from the group consisting of hydrogen, halogen, hydrocarbyl, halohydrocarbyl, hydrocarbyl, substituted metalloid radicals wherein the metalloid is selected from Group IVB of the Periodic Table. Included in the term "hydrocarbyl" are C1 - C20 straight, branched and cyclic alkyl radicals, C6 - C20 aromatic radicals, etc. In addition two or more such radicals may together form a fused ring system or they may form a metallocycle with the metal.

Examples of suitable anionic, delocalised π-bonded groups include cyclopentadienyl, indenyl, fluorenyl, tetrahydroindenyl, tetrahydrofluorenyl, octahydrofluorenyl, etc. as well as phospholes and boratabenzene groups.

Phospholes are anionic ligands that are phosphorus containing analogues to the cyclopentadienyl groups. They are known in the art and described in WO 98/50392.

The boratabenzenes are anionic ligands that are boron containing analogues to benzene. They are known in the art and are described in Organometallics, 14, 1, 471 - 480 (1995).

The preferred transition metal compounds of the present invention are bulky ligand compounds also referred to as metallocene complexes containing at least one of the aforementioned delocalized π-bonded group, in particular cyclopentadienyl ligands. Such metallocene complexes are those based on Group IVA metals for example titanium, zirconium and hafnium.

Metallocene complexes may be represented by the general formula:

LxMQn

where L is a cyclopentadienyl ligand, M is a Group IVA metal, Q is a leaving group and x and n are dependent upon the oxidation state of the metal.

Typically the Group IVA metal is titanium, zirconium or hafnium, x is either 1 or 2 and typical leaving groups include halogen or hydrocarbyl. The cyclopentadienyl ligands may be substituted for example by alkyl or alkenyl groups or may comprise a fused ring system such as indenyl or fluorenyl.

Examples of suitable metallocene complexes are disclosed in EP 129368 and EP 206794. Such complexes may be unbridged eg. bis(cyclopentadienyl) zirconium dichloride, bis(pentamethyl)cyclopentadienyl dichloride, or may be bridged eg. ethylene bis(indenyl) zirconium dichloride or dimethylsilyl(indenyl) zirconium dichloride.

Other suitable bis(cyclopentadienyl) metallocene complexes are those bis(cyclopentadienyl) diene complexes described in WO 96/04290. Examples of such complexes are bis(cyclopentadienyl) zirconium (2.3-dimethyl-1,3-butadiene) and ethylene bis(indenyl) zirconium 1,4-diphenyl butadiene.

Examples of monocyclopentadienyl or substituted monocyclopentadienyl complexes suitable for use in the present invention are described in EP 416815, EP 418044, EP 420436 and EP 551277. Suitable complexes may be represented by the general formula:

CpMXₙ

wherein Cp is a single cyclopentadienyl or substituted cyclopentadienyl group optionally covalently bonded to M through a substituent, M is a Group VIA metal bound in a η⁵ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Particularly preferred monocyclopentadienyl complexes have the formula: 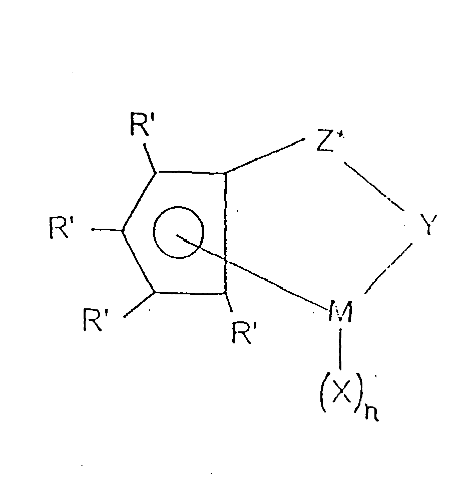 wherein:-
R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,
Y is -O-, -S-, -NR*-, -PR*-,
M is hafnium, titanium or zirconium,
Z* is SiR*₂, CR*₂, SiR*₂SIR*₂, CR*₂CR*₂, CR*=CR*, CR*₂SIR*₂, or GeR*₂, wherein:
   R* each occurrence is independently hydrogen, or a member selected from hydrocarbyl, silyl, halogenated alkyl, halogenated aryl, and combinations thereof, said
   R* having up to 10 non-hydrogen atoms, and optionally, two R* groups from Z* (when R* is not hydrogen), or an R* group from Z* and an R* group from Y form a ring system.,
   and n is 1 or 2 depending on the valence of M.

Examples of suitable monocyclopentadienyl complexes are (tert-butylamido) dimethyl (tetramethyl-η⁵- cyclopentadienyl) silanetitanium dichloride and (2-methoxyphenylamido) dimethyl (tetramethyl--η⁵- cyclopentadienyl) silanetitanium dichloride.

Other suitable monocyclopentadienyl complexes are those comprising phosphinimine ligands described in WO 99/40125, WO 00/05237, WO 00/05238 and WO00/32653. A typical examples of such a complex is cyclopentadienyl titanium [tri (tertiary butyl) phosphinimine] dichloride.

Another type of transition metal compound suitable for use in the present invention are monocyclopentadienyl complexes comprising heteroallyl moieties such as zirconium (cyclopentadienyl) tris (diethylcarbamates) as described in US 5527752 and WO 99/61486.

Particularly preferred monocyclopentadienyl metallocene complexes for use in the present invention may be represented by the general formula: 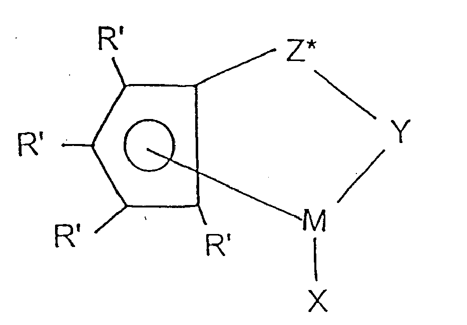 wherein:-
R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral η⁴ bonded diene group having up to 30 non-hydrogen atoms, which forms a π-complex with M;
Y is -O-, -S-, -NR*-, -PR*-,
M is titanium or zirconium in the + 2 formal oxidation state;
Z* is SiR*₂, CR*₂, SiR*₂SIR*₂, CR*₂CR*₂, CR*=CR*, CR*₂SIR*₂, or GeR*₂, wherein:
   R* each occurrence is independently hydrogen, or a member selected from hydrocarbyl, silyl, halogenated alkyl, halogenated aryl, and combinations thereof, said
   R* having up to 10 non-hydrogen atoms, and optionally, two R* groups from Z* (when R* is not hydrogen), or an R* group from Z* and an R* group from Y form a ring system.

Examples of suitable X groups include s-trans-η⁴-1,4-diphenyl-1,3-butadiene, s-trans-η⁴-3-methyl-1,3-pentadiene; s-trans-η⁴-2,4-hexadiene; s-trans-η⁴-1,3-pentadiene; s-trans-η⁴-1,4-ditolyl-1,3-butadiene; s-trans-η⁴-1,4-bis(trimethylsilyl)-1,3-butadiene; s-cis-η⁴-3-methyl-1,3-pentadiene; s-cis-η⁴-1,4-dibenzyl-1,3-butadiene; s-cis-η⁴-1,3-pentadiene; s-cis-η⁴-1,4-bis(trimethylsilyl)-1,3-butadiene, said s-cis diene group forming a π-complex as defined herein with the metal.

Most preferably R' is hydrogen, methyl, ethyl, propyl, butyl, pentyl, hexyl, benzyl, or phenyl or 2 R' groups (except hydrogen) are linked together, the entire C₅R'₄ group thereby being, for example, an indenyl, tetrahydroindenyl, fluorenyl, terahydrofluorenyl, or octahydrofluorenyl group.

Highly preferred Y groups are nitrogen or phosphorus containing groups containing a group corresponding to the formula -N(R^{//})- or -P(R^{//})- wherein R^{//} is C₁₋₁₀ hydrocarbyl.

Most preferred complexes are amidosilane - or amidoalkanediyl complexes.

Most preferred complexes are those wherein M is titanium.

Specific complexes suitable for use in the present invention are those disclosed in WO 95/00526 and are incorporated herein by reference.

A particularly preferred complex for use in the present invention is (t-butylamido) (tetramethyl-η⁵-cyclopentadienyl) dimethyl silanetitanium -η⁴-1.3-pentadiene.

Suitable cocatalysts for use in the present invention are those typically used with the aforementioned transition metal compounds.

For example suitable cocatalysts for use with the traditional Ziegler Natta catalysts are organometallic compounds for example organoaluminium compounds and preferably trialkylaluminium compounds.

A preferred trialkylaluminium compound is triethylaluminium.

Other suitable cocatalysts for use with the transition metal compounds of the present invention include aluminoxanes such as methyl aluminoxane (MAO), boranes such as tris(pentafluorophenyl) borane and borates.

Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon.

A preferred aluminoxane is methyl aluminoxane (MAO).

Other suitable cocatalysts are organoboron compounds in particular triarylboron compounds. A particularly preferred triarylboron compound is tris(pentafluorophenyl) borane.

Other compounds suitable as cocatalysts are compounds which comprise a cation and an anion. The cation is typically a Bronsted acid capable of donating a proton and the anion is typically a compatible non-coordinating bulky species capable of stabilizing the cation.

Such cocatalysts may be represented by the formula:

(L*-H)⁺_{d} (A^{d-})

wherein
L* is a neutral Lewis base
(L*-H)⁺_{d} is a Bronsted acid
A^{d-} is a non-coordinating compatible anion having a charge of d⁻, and
d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylanilinium cations such as N,N-dimethylanilinium cations.

The preferred ionic compounds used as cocatalysts are those wherein the cation of the ionic compound comprises a hydrocarbyl substituted ammonium salt and the anion comprises an aryl substituted borate.

Typical borates suitable as ionic compounds include:
triethylammonium tetraphenylborate
triethylammonium tetraphenylborate,
tripropylammonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the preferred monocyclopentadienyl metallocene complexes of the present invention comprise ionic compounds comprising a cation and an anion wherein the anion has at least one substituent comprising a moiety having an active hydrogen,

Suitable cocatalysts of this type are described in WO 98/27119 the relevant portions of which are incorporated herein by reference.

Examples of this type of anion include:
triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris(pentafluorophenyl) 4-(hydroxyphenyl) borates.

A particularly preferred cocatalyst is bis(hydrogenated tallow alkyl) methyl ammonium tris (pentafluorophenyl) (4-hydroxyphenyl) borate.

With respect to this type of cocatalyst , a preferred compound is the reaction product of an alkylammonium tris(pentaflurophenyl)-4-(hydroxyphenyl) borate and an organometallic compound, for example triethylaluminium.

The catalyst system of the present invention optionally comprises a support.

Suitable support materials include inorganic metal oxides or alternatively polymeric supports may be used for example polyethylene, polypropylene, clays, zeolites, etc.

The most preferred support material for use with the catalysts according to the method of the present invention is silica. Suitable silicas include Ineos ES70 and Grace Davison 948 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

Catalyst systems suitable for use in the process of the present invention include those described in our copending applications WO 04/018530, WO 04/018531, WO 04/020487, WO 04/055062 and WO 04/055063.

By use of the process of the present invention thermal stability of the catalyst is improved leading to increased activity without any deterioration in polymer morphology.

The present invention will now be further illustrated by reference to the following examples:

### Abbreviations

| | |
|---|---|
| TEA | triethylaluminium |

| | |
|---|---|
| Ionic Compound A | [N(H)Me(C₁₈₋₂₂H₃₇₋₄₅)₂][B(C₆F₅)₃(p-OHC₆H₄)] |
| Complex A | (C₅Me₄SiMe₂N^{t}Bu)Ti(η⁴-1,3-pentadiene) |

### Example 1 (Catalyst preparation)

To 2.114 ml (0.156 mmol) of a toluene solution of Ionic compound A (9.7 % wt) was added 0.63 ml (0.156 mmol) of a toluene solution of TEA ([Al]=0.25 mol/l). This solution was the added to 3.0 g of TEA treated silica (Grace 948, [Al]= 1.36 mmol/g) and the mixture was well agitated until non lumps were visible and was allowed to stand for 30 min.

0.87 ml (0.146 mmol) of an heptane solution of Complex A (8.57% wt) was then impregnated. The mixture was well agitated until no lumps were visible and was allowed to stand for 30 min. Three washes were performed with 3*30 ml of hexane and the catalyst was finally dried under vacuum.
[Al]=1.32 mmol/g
[Ti]=38 µmol/g

### Example 2 (Comparative example)

To a gas phase polymerization reactor was added 110 g of salt (previously dried in a vacuum oven over 48 hours at 160°C) and 1.8 g of TEA treated silica ([Al] =1.38 mmol/g). Then the reactor was heated up to the desired polymerization temperature and ethylene was charged to the reactor reaching the desired pressure of 10 bar. At the polymerization temperature and pressure, the catalyst was injected (typically 50 mg together with 200 mg TEA/silica) via a dry injection unit; this started the gas phase homo-polymerization. The reactor pressure was maintained constant by continuous addition of ethylene. At the end of each experiment (60 minutes run), the reaction was stopped by opening the purging valve, allowing the non reacted monomer to leave the reactor quickly. The reactor was then purged with nitrogen a couple of times cooled down and opened. The polymer product was collected and washed with water, to separate the salt, and dried under vacuum in a vacuum oven for four hours at 50°C to be ready for analysis.

**Table 1: Polymerisation results without pre-polymerisation**

| | | | |
|---|---|---|---|
| **Run** | **Run Temperature** | **Yield (g/g.h)** | **PE Average particle size (**µ**m)** |
| 1 | 70 | 451 | 321 |
| 2 | 75 | 527 | 326 |
| 3 | 80 | 663 | 391 |
| 4 | 85 | 567 | 377 |
| 5 | 90 | 519 | 355 |

The highest catalyst activity is obtained at the reaction temperature of 80°C with a significant deactivation for higher temperatures

### Example 3 (runs with pre-polymerisation step)

### Pre-polymerisation step

To a gas phase polymerization reactor was added 110 g of salt (previously dried in a vacuum oven over 48 hours at 160°C) and 1.8 g of TEA treated silica ([Al] =1.38 mmol/g). Then the reactor was heated up to the targeted temperature (see Table 2), ethylene was charged to the reactor reaching the desired pressure of 5 bar. The catalyst was then injected (typical 50 mg together with 200 mg TEA/silica) via the dry injection unit; this started the gas phase pre-polymerization which was lasted exactly 5 minutes.

### Polymerisation step

At the end of the pre-polymerisation step, the reactor temperature and pressure were raised to the targeted polymerization temperature (see table 2 below) and pressure (ethylene pressure of 10 bar) as quickly as possible (typically, half a minute for the pressure, and two minutes for stable temperature). The stirrer speed was kept constant all over the experiment to be 200 RPM. The reactor pressure was maintained constant by continuous addition of ethylene. At the end of each experiment (60 minutes run), the reaction was stopped by opening the purging valve, allowing the non reacted monomer to leave the reactor quickly. The reactor was then purged with nitrogen a couple of times cooled down and opened. The polymer product was collected and washed with water, to separate the salt, and dried under vacuum in a vacuum oven for four hours at 50°C to be ready for analysis

**Table 2: Polymerisation results after pre-polymerisation step**

| | | | | |
|---|---|---|---|---|
| **Run** | **Polymerisation Temperature (°C)** | **Pre-polymerisation Temperature (°C)** | **Yield (g/g.h)** | **PE average particle size** |
| 6 | 70 | 70 | 384 | 272 |
| 7 | 75 | 70 | 467 | 328 |
| 8 | 80 | 70 | 565 | 332 |
| 9 | 85 | 70 | 667 | 338 |
| 10 | 90 | 70 | 769 | 408 |
| 11 | 90 | 60 | 487 | 323 |
| 12 | 90 | 80 | 561 | 352 |
| 13 | 90 | 90 | 604 | 322 |

Run 10 illustrates prepolymerisation at 70° C followed by polymerisation at 90° C resulting in the highest polymer yield together with the highest average particle size of the polymer produced. Run 5 represents the comparative process (without prepolymerisation) performed at 90° C resulting in both a lower yield and lower average particle size.

## Claims

1. A process for the polymerisation of ethylene or the copolymerisation of ethylene and alpha-olefins in the presence of a catalyst system comprising as components
(a) a transition metal compound,
(b) a cocatalyst, and
(c) optionally a support,
said process ***characterised in that*** said catalyst system comprises a prepolymer prepared by contact of the catalyst components with ethylene and/or one of more alpha-olefins at a temperature in the range 60°C to 100°C.
